# EUROPÄISCHE PATENTANMELDUNG

(11) **EP 3 081 372 A1**
(43) Veröffentlichungstag der Anmeldung: **19.10.2016**
(21) Anmeldenummer: 15163514.1
(22) Anmeldetag: 14.04.2015
(51) Int. Cl.: B31B 1/14

(54) **VORRICHTUNG UND VERFAHREN ZUM HERSTELLEN VON FALTSCHACHTELN**

(71) Anmelder: Mayr-Melnhof Karton AG, 1041 Wien (AT)
(72) Erfinder: Theis, Uwe, 54317 Riveris (DE); Kollmann, Jürgen, 54340 Pölich (DE)
(74) Vertreter: Hofstetter, Schurack & Partner

(57) **Zusammenfassung**

Die Erfindung betrifft eine Vorrichtung (10) zum Herstellen von Faltschachteln. Die Vorrichtung (10) weist ein Verarbeitungsmodul (12) zum Erzeugen wenigstens eines Zuschnitts (16) aus einem bahnförmigen Packstoff (18) auf, wobei das Verarbeitungsmodul (12) eine Packstoffbahnhalteeinrichtung (20) zum Lagern des bahnförmigen Packstoffs, eine Packstoffbahntransporteinrichtung (22) zum Transportieren des bahnförmigen Packstoffs (18) und zumindest eine Bearbeitungseinrichtung (24) aufweist, mittels welcher der wenigstens eine Zuschnitt (16) aus dem bahnförmigen Packstoff (18) herstellbar ist, wobei die Bearbeitungseinrichtung (24) zumindest eine Lasereinrichtung (26) zur Ablation von Packstoffmaterial umfasst. Weiterhin weist die Vorrichtung (10) ein Faltmodul (14) zum Falten des wenigstens einen Zuschnitts (16) zu einer Faltschachtel auf. Die Erfindung betrifft weiterhin ein Verfahren zum Herstellen einer Faltschachtel.

## Beschreibung

Die Erfindung betrifft eine Vorrichtung und ein Verfahren zum Herstellen von Faltschachteln aus einem Packstoff.

Bei der Herstellung von Faltschachteln als Primär- oder Sekundärverpackung werden üblicherweise Materialien wie Karton, Graukarton oder Vollpappe als Packstoff verwendet. Je nach Art und Einsatzzweck der Faltschachtel können diese Packstoffmaterialien zusätzlich beschichtet, kaschiert oder bedruckt sein. Zur Faltschachtelherstellung werden die Packstoffe üblicherweise zunächst bogenförmig zugeschnitten, mit Hilfe eines Anlegers als Stapel in eine Stanzstation eingestellt und vereinzelt mit Flachbettstanzen oder Stanztiegeln bearbeitet, um Zuschnitte mit gewünschten Biegestellen herzustellen. Ziel der Bearbeitung ist es generell, die erforderliche Kontur und die gewünschten Biegestellen des Zuschnitts zu erzeugen. Anschließend werden die Zuschnitte zu einer Faltstation transportiert und dort gemäß den Biegestellen zur Faltschachtel gefaltet.

Als nachteilig an den bekannten Vorrichtungen und Verfahren ist der Umstand anzusehen, dass die Herstellung von Faltschachteln vergleichsweise aufwändig ist und viele, teils manuell durchzuführende Einzelschritte umfasst.

Aufgabe der vorliegenden Erfindung ist es, eine Vorrichtung und ein Verfahren zu schaffen, welche eine schnellere und flexiblere Herstellung von Faltschachteln ermöglichen.

Die Aufgaben werden erfindungsgemäß durch eine Vorrichtung mit den Merkmalen des Patentanspruchs 1 sowie durch ein Verfahren gemäß Patentanspruch 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft eine Vorrichtung zum Herstellen von Faltschachteln. Dabei ist eine schnellere und flexiblere Herstellung von Faltschachteln erfindungsgemäß dadurch ermöglicht, dass die Vorrichtung ein Verarbeitungsmodul zum Erzeugen wenigstens eines Zuschnitts aus einem bahnförmigen Packstoff aufweist, wobei das Verarbeitungsmodul eine Packstoffbahnhalteeinrichtung zum Lagern des bahnförmigen Packstoffs, eine Packstoffbahntransporteinrichtung zum Transportieren des bahnförmigen Packstoffs und zumindest eine Bearbeitungseinrichtung aufweist, mittels welcher der wenigstens eine Zuschnitt aus dem bahnförmigen Packstoff herstellbar ist, wobei die Bearbeitungseinrichtung zumindest eine Lasereinrichtung zur Ablation von Packstoffmaterial umfasst. Weiterhin weist die erfindungsgemäße Vorrichtung ein Faltmodul zum Falten des wenigstens einen Zuschnitts zu einer Faltschachtel auf. Mit anderen Worten ist es im Unterschied zum Stand der Technik erfindungsgemäß vorgesehen, dass ein bahnförmiger Packstoff in die Packstoffbahnhalteeinrichtung des Verarbeitungsmoduls einsetzbar ist, von wo aus er mittels der Packstoffbahntransporteinrichtung transportierbar und mit Hilfe einer Bearbeitungseinrichtung des Verarbeitungsmoduls zum Zuschnitt zuschneidbar und mit Biegestellen versehbar ist. Die Bearbeitungseinrichtung umfasst hierzu zumindest eine Lasereinrichtung, mittels welcher ein Materialabtrag zur gezielten Schwächung des Packstoffmaterials erfolgt. Die Lasereinrichtung kann als abtragende Schneideinrichtung dabei grundsätzlich zum Rillen, Ritzen, Schneiden und/oder Perforieren des bahnförmigen Packstoffs verwendet werden. Im Unterschied zu mechanischen Trennwerkzeugen erlaubt die Lasereinrichtung dabei eine erhöhte Flexibilität sowie die Möglichkeit zur Ausbildung von geometrisch komplexen Biege- und Schnittlinien ohne komplizierten und aufwändigen Werkzeugwechsel. Dabei kann grundsätzlich vorgesehen sein, dass die Lasereinrichtung mehrere Laserquellen, beispielsweise Laserdioden, umfasst. Ebenso können mehrere gleich oder unterschiedlich ausgebildete Lasereinrichtungen vorgesehen sein, um beispielsweise ein sogenanntes Laserarray auszubilden. Mit Hilfe des Verarbeitungsmoduls kann zudem vorteilhaft auf die bislang erforderlichen Verarbeitungsschritte Stanzen von Bögen aus dem bahnförmigen Packstoff, Stapeln dieser Bögen, Weitertransport dieser Bögen zu einer Stanzstation und vereinzelte Zuführung der Bögen zur Stanzstation, um Zuschnitte herzustellen, verzichtet werden. Dementsprechend kann die erfindungsgemäße Vorrichtung ohne die entsprechenden Stationen und Einrichtungen ausgebildet sein, wodurch entsprechende Kostensenkungen und Bauraumeinsparungen realisiert werden. Der Zuschnitt kann anschließend zum bezüglich einer Transportrichtung des Packstoffs stromab liegenden Faltmodul weitertransportiert und dort zur Faltschachtel gefaltet werden. Damit ermöglicht die erfindungsgemäße Vorrichtung eine besonders schnelle, flexible und einfache Herstellung von Faltschachteln direkt aus einem bahnförmigen Packstoff. Durch den modularen Aufbau der Vorrichtung können zudem besonders einfach unterschiedliche Verarbeitungsmodule, in denen die Herstellung von Zuschnitten aus dem bahnförmigen Packstoff erfolgt, mit unterschiedlichen Faltmodulen, in denen die Zuschnitte zu Faltschachteln gefaltet werden, kombiniert werden. Dies erlaubt eine besonders schnelle und einfache Anpassung der Vorrichtung an unterschiedliche Packstoffe und Faltschachteltypen. Weiterhin kann vorgesehen sein, dass das Faltmodul zur Herstellung von ein- und/oder mehrteiligen Faltschachteln ausgebildet ist.

In Abhängigkeit des Packstoffs und der durchzuführenden Bearbeitung hat es sich als vorteilhaft gezeigt, wenn die Lasereinrichtung wenigstens einen UV-Laser und/oder wenigstens einen IR-Laser, insbesondere einen CO₂-Laser, und/oder wenigstens einen gepulst betreibbaren Laser und/oder wenigstens einen Laser mit einer Leistung von mindestens 1 W umfasst. Hierdurch wird eine besonders schnelle und zuverlässige Bearbeitung des bahnförmigen Packstoffs ermöglicht. UV-Laser und IR-Laser erzeugen Strahlung in unterschiedlichen Wellenlängenbereichen, wodurch optimale Bearbeitungsergebnisse für unterschiedliche Packstoffe sichergestellt werden können. Indem der Laser gepulst, also beispielsweise im Nano-, Piko-, Femto- oder Attosekundenbereich betreibbar ist, können hohe Spitzenintensitäten mit sehr kurzer Dauer erzeugt werden, wodurch ein besonders präziser Materialabtrag des Packstoffs ermöglicht ist. Je nach verwendetem Packstoff hat es sich als vorteilhaft gezeigt, wenn die Leistung des Lasers über 1 W liegt und beispielsweise im Bereich von 5 Watt bis 200 Watt gewählt ist.

In einer weiteren vorteilhaften Ausgestaltung der Erfindung ist vorgesehen, dass die Lasereinrichtung relativ zu einer Transportrichtung des bahnförmigen Packstoffs bewegbar ist und/oder dass die Lasereinrichtung ein steuerbares und/oder regelbares optisches System zum Ablenken und/oder Fokussieren ihres Laserstrahls umfasst. Dies erlaubt besonders hohe Bearbeitungs- und damit Transportgeschwindigkeiten sowie die Ausbildung besonders komplexer Schnitt- und Biegelinien.

In einer weiteren vorteilhaften Ausgestaltung der Erfindung ist vorgesehen, dass die Bearbeitungseinrichtung zusätzlich zu der Lasereinrichtung wenigstens ein mechanisches Werkzeug umfasst, mittels welchem der bahnförmige Packstoff zu rillen und/oder zu ritzen und/oder zu schneiden und/oder zu perforieren und/oder zu stanzen und/oder zu prägen und/oder auszubrechen ist. Hierdurch kann die Bearbeitungsgeschwindigkeit das Packstoff vorteilhaft weiter gesteigert werden. Darüber hinaus können mit Hilfe des mechanischen Werkzeugs neben Trennschritten auch Bearbeitungsschritte aus der Gruppe Umformen, insbesondere Druckumformen durchgeführt werden, die mit der Lasereinrichtung nicht oder nur mit großem Aufwand durchführbar wären. Das mechanische Werkzeug kann beispielsweise als Rotationsstanze, Bandstahlschnittwerkzeug, Schneidmesser, Rillmesser, Prägewerkzeug oder dergleichen ausgebildet sein. Ebenso kann das mechanische Werkzeug zum Abtrennen des oder der Zuschnitte vom überschüssigen Packstoff dienen.

In einer weiteren vorteilhaften Ausgestaltung der Erfindung ist vorgesehen, dass das Verarbeitungsmodul Synchronisierungsmittel zum Synchronisieren der Packstoffbahntransporteinrichtung und der Bearbeitungseinrichtung umfasst. Auf diese Weise ist besonders zuverlässig sichergestellt, dass die Bearbeitung des Packstoffs in Abhängigkeit seiner Position und relativen Geschwindigkeit gegenüber der Bearbeitungseinrichtung durchgeführt werden kann, wodurch eine besonders hohe Qualität der aus dem Packstoff gebildeten Zuschnitte gewährleistet ist. Insbesondere kann die Herstellung des oder der Zuschnitte "registergenau" erfolgen.

In einer weiteren vorteilhaften Ausgestaltung der Erfindung ist vorgesehen, dass zwischen dem Verarbeitungsmodul und dem Faltmodul ein Einlegemodul angeordnet ist, welches ausgebildet ist, mehrere Zuschnitte aus dem Verarbeitungsmodul zu sammeln und/oder dem Faltmodul vereinzelt zuzuführen. Dies ist insbesondere bei stark unterschiedlichen Verarbeitungsgeschwindigkeiten von Verarbeitungsmodul und Faltmodul und in sonstigen Fällen, in denen keine kontinuierliche Weiterleitung der im Verarbeitungsmodul erzeugten Zuschnitte an das Faltmodul möglich oder wünschenswert ist, vorteilhaft.

Weitere Vorteile ergeben sich, wenn das Faltmodul eine Auftragseinrichtung zum Auftragen von Klebstoff auf einen Laschenbereich des wenigstens einen Zuschnitts umfasst. Hierdurch können die Zuschnitte gefaltet und verklebt werden. Dabei können grundsätzlich alle geeigneten Klebstoffe vorgesehen sein, wobei sich in den meisten Fällen Leim oder ein Dispersionsklebstoff auf Polyvinylacetat-Basis anbietet.

In einer weiteren vorteilhaften Ausgestaltung der Erfindung sind zumindest die Packstoffbahnhalteeinrichtung, die Packstoffbahntransporteinrichtung und die Bearbeitungseinrichtung in einem gemeinsamen Gehäuse aufgenommen. Auf diese Weise ist die Vorrichtung besonders kompakt ausgebildet. Grundsätzlich kann auch vorgesehen sein, dass auch das Faltmodul im gemeinsamen Gehäuse angeordnet ist.

Weitere Vorteile ergeben sich, indem die Packstoffbahnhalteeinrichtung zur Halterung einer Rolle des bahnförmigen Packstoffs ausgebildet ist. Dies ermöglicht es, den zu einer Rolle aufgerollten bahnförmigen Packstoff unmittelbar und ohne weitere Bearbeitungsschritte in das Verarbeitungsmodul bzw. in dessen Packstoffbahnhalteeinrichtung einzusetzen, wonach der Packstoff von der Rolle abgerollt und mit Hilfe der Packstoffbahntransporteinrichtung zur weiteren Verarbeitung weitertransportiert werden kann. Eine Rolle bahnförmigen Packstoffs wird dabei auch als Volltambour oder Bobine bezeichnet. Es kann weiterhin vorgesehen sein, dass die Packstoffbahnhalteeinrichtung ein Tambour-Magazin für zwei oder mehr Rollen bzw. Volltamboure und/oder eine Tambour-Wechseleinrichtung aufweist, so dass abgerollte Rollen/Leertamboure vorzugsweise automatisiert aus dem Verarbeitungsmodul entfernbar und durch eine neue Rolle bzw. einen neuen Volltambour ersetzbar sind.

In einer weiteren vorteilhaften Ausgestaltung der Erfindung ist eine Absaugeinrichtung vorgesehen, mittels welcher überschüssiger Packstoff von dem wenigstens einen Zuschnitt entfernbar ist. Mit anderen Worten ist es vorgesehen, überschüssigen Packstoff, das heißt Ränder außerhalb der Nutzen- bzw. Zuschnittkontur, während oder nach dem Herstellen des Zuschnitts vom verbleibenden Zuschnitt abzusaugen. Dies stellt eine besonders einfache und schnelle Möglichkeit zur Vereinzelung der Zuschnitte sowie zum Entfernen von überschüssigem Packstoff dar. Die Absaugeinrichtung kann grundsätzlich ein Bestandteil des Verarbeitungsmoduls oder des Faltmoduls sein oder als separates Modul stromab der Bearbeitungseinrichtung angeordnet sein.

Ein zweiter Aspekt der Erfindung betrifft ein Verfahren zum Herstellen einer Faltschachtel. Erfindungsgemäß umfasst das Verfahren dabei zumindest die Schritte Lagern eines bahnförmigen Packstoffs in einer Packstoffbahnhalteeinrichtung eines Verarbeitungsmoduls, Transportieren des bahnförmigen Packstoffs entlang einer Transportrichtung mittels einer Packstoffbahntransporteinrichtung des Verarbeitungsmoduls, Herstellen wenigstens eines Zuschnitts aus dem bahnförmigen Packstoff mittels einer Bearbeitungseinrichtung des Verarbeitungsmoduls, wobei das Herstellen zumindest die Ablation von Packstoffmaterial mittels wenigstens einer Lasereinrichtung der Bearbeitungseinrichtung umfasst, und Falten des wenigstens einen Zuschnitts zu einer Faltschachtel mittels eines Faltmoduls. Das erfindungsgemäße Verfahren ermöglicht damit eine schnellere und flexiblere Herstellung von Faltschachteln, beispielsweise von Zigarettenschachteln. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass der bahnförmige Packstoff als Rolle in der Packstoffbahnhalteeinrichtung angeordnet wird. Dies ermöglicht es, den zu einer Rolle aufgerollten bahnförmigen Packstoff unmittelbar und ohne weitere Bearbeitungsschritte in das Verarbeitungsmodul bzw. in dessen Packstoffbahnhalteeinrichtung einzusetzen, wonach der Packstoff von der Rolle abgerollt und mit Hilfe der Packstoffbahntransporteinrichtung zur weiteren Verarbeitung weitertransportiert wird.

In einer weiteren vorteilhaften Ausgestaltung der Erfindung wird der bahnförmige Packstoff vor dem Anordnen in der Packstoffbahnhalteeinrichtung bedruckt. Hierdurch kann die spätere Faltschachtel mit Informationen, bestimmten Oberflächenbeschaffenheiten, graphischen Elementen etc. versehen werden. Obwohl der Packstoff grundsätzlich mit allen geeigneten Druckverfahren bedruckbar ist, haben sich Offset-, Tief- und Flexodruckverfahren für die meisten Anwendungen als besonders vorteilhaft und wirtschaftlich erwiesen.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Darstellung einer erfindungsgemäßen Vorrichtung zum Herstellen von Faltschachteln gemäß einem ersten Ausführungsbeispiel; und
- Fig. 2: eine schematische Darstellung einer erfindungsgemäßen Vorrichtung zum Herstellen von Faltschachteln gemäß einem zweiten Ausführungsbeispiel;

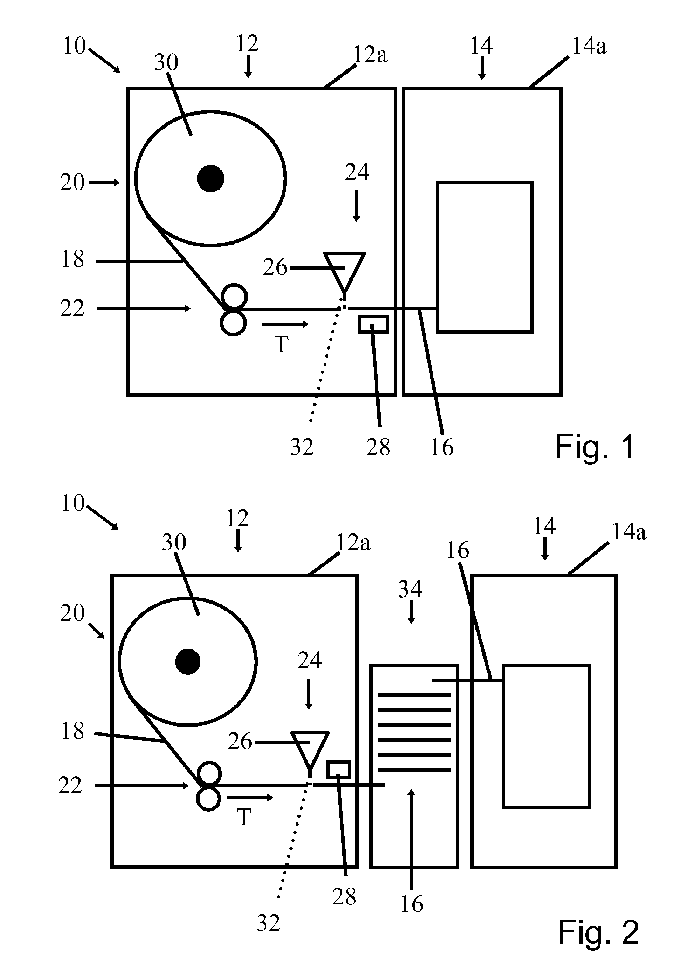

Fig. 1 zeigt eine schematische Darstellung einer erfindungsgemäßen Vorrichtung 10 zum Herstellen von Faltschachteln gemäß einem ersten Ausführungsbeispiel. Die Vorrichtung 10 ist modular aufgebaut und umfasst ein Verarbeitungsmodul 12 und ein Faltmodul 14. Das Verarbeitungsmodul 12 dient zum Erzeugen eines oder mehrerer Zuschnitte 16 aus einem bahnförmigen Packstoff 18 und umfasst eine Packstoffbahnhalteeinrichtung 20 zum Halten und Lagern des bahnförmigen Packstoffs 18 im Verarbeitungsmodul 12, eine Packstoffbahntransporteinrichtung 22 zum Transportieren des bahnförmigen Packstoffs 18 und zumindest eine Bearbeitungseinrichtung 24, mittels welcher der wenigstens eine Zuschnitt 16 aus dem bahnförmigen Packstoff 18 herstellbar ist. Zu diesem Zweck umfasst die Bearbeitungseinrichtung 24 zumindest eine Lasereinrichtung 26 zur Ablation von Packstoffmaterial aus dem Packstoff 18. Im gezeigten Ausführungsbeispiel umfasst die Bearbeitungseinrichtung 24 zusätzlich ein grundsätzlich optionales mechanisches Werkzeug 28, welches vorliegend als Rotationsstanze ausgebildet ist. Das Faltmodul 14 ist bezüglich einer Transportrichtung T des Packstoffs 18 stromab der Bearbeitungseinrichtung 24 angeordnet und faltet die aus dem Packstoff 18 erzeugten Zuschnitte 16 zu entsprechenden Faltschachteln. Bei den Faltschachteln handelt es sich beispielsweise um Zigarettenschachteln.

Das Verarbeitungsmodul 12 und das Faltmodul 14 sind in jeweiligen Gehäusen 12a, 14a aufgenommen, wobei grundsätzlich auch ein gemeinsames Gehäuse vorgesehen sein kann.

Wie man in Fig. 1 erkennt, wird der bahnförmige Packstoff 18 als Rolle 30 (Volltambour) in die Packstoffbahnhalteeinrichtung 20 eingesetzt und ohne weitere Zwischenschritte wie beispielsweise Bogenstanzung oder dergleichen zu entsprechenden Zuschnitten 16 verarbeitet. Der Packstoff 18 kann dabei bedruckt oder unbedruckt sein und besteht im vorliegenden Ausführungsbeispiel aus Karton mit einer Grammatur von etwa 150 g/m², wobei grundsätzlich auch andere Materialien wie Graukarton oder Vollpappe bzw. Papiersorten mit Grammaturen zwischen 40 g/m² und 1000 g/m², insbesondere zwischen 120 g/m² und 250 g/m² vorgesehen sein können.

Mit Hilfe der Bearbeitungseinrichtung 24 wird der von der Rolle 30 abgewickelte, bahnförmige Packstoff 18 bedarfsweise gerillt und/oder geritzt und/oder geschnitten und/oder perforiert und/oder gestanzt und/oder geprägt und/oder ausgebrochen. Ziel ist es, die erforderliche Kontur des Zuschnitts 16 zu erzeugen und Biegestellen herzustellen, die den Ort der Biegung festlegen, ein scharnierartiges Bewegen der Biegestelle gestatten und die Steifigkeit des Packstoffs 18 an dieser Stelle so schwächen, dass im Faltmodul 14 ein störungsfreies Falten zur Faltschachtel sichergestellt ist. Die Lasereinrichtung 26 umfasst im gezeigten Ausführungsbeispiel einen im Picosekundenbereich gepulst betreibbaren CO₂-Laser mit einer Leistung von 50 W und dient in erster Linie zum Schneiden, Rillen und Perforieren des Packstoffs 18. Das mechanische Werkzeug 28 unterstützt die Lasereinrichtung 26 beim Erzeugen der Konturen der Zuschnitte 16. Die Lasereinrichtung 26 ist relativ zur Transportrichtung des bahnförmigen Packstoffs 18 bewegbar. Zusätzlich kann der Laserstrahl 32 über ein regelbares optisches System (nicht gezeigt) abgelenkt und fokussiert werden, so dass besonders komplexe Schnitt- und Rilllinien im Packstoff 18 erzeugbar sind. Dementsprechend komplexe und gegebenenfalls mehrteilige Faltschachteln können anschließend mit Hilfe des Faltmoduls 14 aus diesen Zuschnitten 16 erzeugt werden.

Fig. 2 zeigt eine schematische Darstellung einer erfindungsgemäßen Vorrichtung 10 zum Herstellen von Faltschachteln gemäß einem zweiten Ausführungsbeispiel. Der grundsätzliche Aufbau der Vorrichtung 10 ist bereits aus der vorhergehenden Beschreibung des ersten Ausführungsbeispiels bekannt. Im Unterschied zum ersten Ausführungsbeispiel umfasst die in Fig. 2 gezeigte Vorrichtung 10 ein als Prägewerkzeug ausgebildetes mechanisches Werkzeug 28, mittels welchem beispielsweise Brailleschrift im Packstoff 18 erzeugbar ist. Ebenso kann vorgesehen sein, dass das mechanische Werkzeug 28 zum Herausdrücken der Zuschnitte 16 aus dem verbleibenden Packstoff 18 verwendet wird, wodurch die Zuschnitte 16 gleichzeitig vereinzelt werden können. Ein weiterer Unterscheid zum ersten Ausführungsbeispiel besteht darin, dass zwischen dem Verarbeitungsmodul 12 und dem Faltmodul 14 ein Einlegemodul 34 angeordnet ist, welches ausgebildet ist, mehrere Zuschnitte 16 aus dem Verarbeitungsmodul 12 zu sammeln und dem Faltmodul 14 vereinzelt zuzuführen. Dies ist in Fällen, in denen keine kontinuierliche Weiterleitung der im Verarbeitungsmodul 12 erzeugten Zuschnitte 16 an das Faltmodul 14 möglich oder wünschenswert ist, vorteilhaft. Alternativ oder zusätzlich kann vorgesehen sein, dass stromab der Bearbeitungseinrichtung 24 eine Absaugeinrichtung (nicht gezeigt) angeordnet ist, mittels welcher überschüssiger Packstoff 18 von den hergestellten Zuschnitten 16 abgesaugt wird. Alternativ oder zusätzlich zur Absaugeinrichtung kann grundsätzlich auch eine an sich bekannte Nutzentrennvorrichtung vorgesehen sein.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

## Patentansprüche

1. Vorrichtung (10) zum Herstellen von Faltschachteln mit
- einem Verarbeitungsmodul (12) zum Erzeugen wenigstens eines Zuschnitts (16) aus einem bahnförmigen Packstoff (18), wobei das Verarbeitungsmodul (12) eine Packstoffbahnhalteeinrichtung (20) zum Lagern des bahnförmigen Packstoffs, eine Packstoffbahntransporteinrichtung (22) zum Transportieren des bahnförmigen Packstoffs (18) und zumindest eine Bearbeitungseinrichtung (24) aufweist, mittels welcher der wenigstens eine Zuschnitt (16) aus dem bahnförmigen Packstoff (18) herstellbar ist, wobei die Bearbeitungseinrichtung (24) zumindest eine Lasereinrichtung (26) zur Ablation von Packstoffmaterial umfasst; und
- einem Faltmodul (14) zum Falten des wenigstens einen Zuschnitts (16) zu einer Faltschachtel.

2. Vorrichtung (10) nach Anspruch 1,
**dadurch gekennzeichnet, dass**
die Lasereinrichtung (26) wenigstens einen UV-Laser und/oder wenigstens einen IR-Laser, insbesondere einen CO₂-Laser, und/oder wenigstens einen gepulst betreibbaren Laser und/oder wenigstens einen Laser mit einer Leistung von mindestens 1 W umfasst.

3. Vorrichtung (10) nach Anspruch 1 oder 2,
**dadurch gekennzeichnet, dass**
die Lasereinrichtung (26) relativ zu einer Transportrichtung (T) des bahnförmigen Packstoffs (18) bewegbar ist und/oder dass die Lasereinrichtung (26) ein steuerbares und/oder regelbares optisches System zum Ablenken und/oder Fokussieren ihres Laserstrahls (32) umfasst.

4. Vorrichtung (10) nach einem der Ansprüche 1 bis 3,
**dadurch gekennzeichnet, dass**
die Bearbeitungseinrichtung (24) zusätzlich zu der Lasereinrichtung (26) wenigstens ein mechanisches Werkzeug (28) umfasst, mittels welchem der bahnförmige Packstoff (18) zu rillen und/oder zu ritzen und/oder zu schneiden und/oder zu perforieren und/oder zu stanzen und/oder zu prägen und/oder auszubrechen ist.

5. Vorrichtung (10) nach einem der Ansprüche 1 bis 4,
**dadurch gekennzeichnet, dass**
das Verarbeitungsmodul (12) Synchronisierungsmittel zum Synchronisieren der Packstoffbahntransporteinrichtung (22) und der Bearbeitungseinrichtung (24) umfasst.

6. Vorrichtung (10) nach einem der Ansprüche 1 bis 5,
**dadurch gekennzeichnet, dass**
zwischen dem Verarbeitungsmodul (12) und dem Faltmodul (14) ein Einlegemodul (34) angeordnet ist, welches ausgebildet ist, mehrere Zuschnitte (16) aus dem Verarbeitungsmodul (12) zu sammeln und/oder dem Faltmodul (14) vereinzelt zuzuführen.

7. Vorrichtung (10) nach einem der Ansprüche 1 bis 6,
**dadurch gekennzeichnet, dass**
das Faltmodul (14) eine Auftragseinrichtung zum Auftragen von Klebstoff auf einen Laschenbereich des wenigstens einen Zuschnitts (16) umfasst.

8. Vorrichtung (10) nach einem der Ansprüche 1 bis 7,
**dadurch gekennzeichnet, dass**
zumindest die Packstoffbahnhalteeinrichtung (20), die Packstoffbahntransporteinrichtung (22) und die Bearbeitungseinrichtung (24) in einem gemeinsamen Gehäuse (12a) aufgenommen sind.

9. Vorrichtung (10) nach einem der Ansprüche 1 bis 8,
**dadurch gekennzeichnet, dass**
die Packstoffbahnhalteeinrichtung (20) zur Halterung einer Rolle (30) des bahnförmigen Packstoffs (18) ausgebildet ist.

10. Vorrichtung (10) nach einem der Ansprüche 1 bis 9,
**dadurch gekennzeichnet, dass**
eine Absaugeinrichtung vorgesehen ist, mittels welcher überschüssiger Packstoff (18) von dem wenigstens einen Zuschnitt (16) entfernbar ist.

11. Verfahren zum Herstellen einer Faltschachtel, umfassend die Schritte
- Lagern eines bahnförmigen Packstoffs (18) in einer Packstoffbahnhalteeinrichtung (20) eines Verarbeitungsmoduls (12);
- Transportieren des bahnförmigen Packstoffs (18) entlang einer Transportrichtung (T) mittels einer Packstoffbahntransporteinrichtung (22) des Verarbeitungsmoduls (12);
- Herstellen wenigstens eines Zuschnitts (16) aus dem bahnförmigen Packstoff (18) mittels einer Bearbeitungseinrichtung (24) des Verarbeitungsmoduls (12), wobei das Herstellen zumindest die Ablation von Packstoffmaterial mittels wenigstens einer Lasereinrichtung (26) der Bearbeitungseinrichtung (24) umfasst; und
- Falten des wenigstens einen Zuschnitts (16) zu einer Faltschachtel mittels eines Faltmoduls (14).

12. Verfahren nach Anspruch 11,
**dadurch gekennzeichnet, dass**
der bahnförmige Packstoff (18) als Rolle (30) in der Packstoffbahnhalteeinrichtung (20) angeordnet wird.

13. Verfahren nach Anspruch 11 oder 12,
**dadurch gekennzeichnet, dass**
der bahnförmige Packstoff (18) vor dem Anordnen in der Packstoffbahnhalteeinrichtung (20) bedruckt wird.
